# EUROPEAN PATENT APPLICATION

(11) **EP 2 525 550 A1**
(43) Date of publication of application: **21.11.2012**
(21) Application number: 12167652.2
(22) Date of filing: 11.05.2012
(51) Int. Cl.: H04L 29/08, H04L 12/24, H04L 12/14

(54) **Controlling quality of service provided to over the top applications in a telecommunications system**

(30) Priority: 20.05.2011 US 201113112071
(71) Applicant: Telefonaktiebolaget L M Ericsson (publ), 164 83 Stockholm (SE)
(72) Inventor: Connor, Brenda Ann, College Station, TX Texas 77840 (US)
(74) Representative: HOFFMANN EITLE

(57) **Abstract**

A method is disclosed for controlling Quality of Service (QoS) provided through a network for communications between an Over The Top (OTT) application on an OTT application server and a User Equipment node (UE). The method includes receiving a registration request from the OTT application requesting provisioning of QoS through the network for the OTT application. An Application Programming Interface (API) of a service delivery platform (SDP) is configured to have dependent rules that provision a QoS level for the OTT application responsive to the registration request. QoS for a communication session between the UE and the OTT application through the network is controlled responsive to the QoS level provisioned for the OTT application. Related communication systems, OTT application servers, and SDPs are disclosed. Preferably, the API of the SDP generates a billable event that is charged to the OTT application server. The user of the UE is billed using a billing relationship between the OTT application server and the user.

## Description

### BACKGROUND

The present invention relates to communications networks. More particularly, and not by way of limitation, the present invention is directed to systems and methods of controlling Quality of Service (QoS) provided through a network for communications between an Over The Top (OTT) application on an OTT application server and a User Equipment node (UE).

With the increased popularity and enhanced services available on the Internet, a wide variety of OTT service providers such as Google®, Skype®, Vonage®, Facebook®, etc. have established a large base of subscribers. This phenomenon has made "bit pipes" out of the carrier networks, which removes network operators from lucrative revenue opportunities in the services domain.

Network operators have typically provided higher levels of QoS for their customers than they have provided for non-customers, such as for OTT service providers. Network traffic from OTT services providers has been handled with a best-effort level of priority, which is below that provided by network operators for their customers.

With new rules being adopted for Net Neutrality, network operators are being required to provide non-customer entities with access to the levels of QoS that they provide to their customers. Network operators will want to charge OTT service providers for access to enhanced QoS through networks. However, billing relationships between the network operators and OTT service providers have not been difficult to establish due to a lack of technical and business solutions that can merge their independent hardware assets and their subscriber bases.

### SUMMARY

To address the foregoing problems identified in the prior art, the Detailed Description presented hereinafter will describe several systems and methods directed to controlling the QoS provided through a network for communications between an OTT application on an OTT application server and a User Equipment node (UE). In one embodiment, a method includes receiving a registration request from the OTT application requesting provisioning of QoS through the network for the OTT application. An Application Programming Interface (API) of a service delivery platform (SDP) is configured to have dependent rules that provision a QoS level for the OTT application responsive to the registration request. QoS for a communication session between the UE and the OTT application through the network is controlled responsive to the QoS level provisioned for the OTT application.

A related embodiment is directed to a communications system that controls QoS provided for communications through a network between an OTT application and a User Equipment node (UE). An OTT application server contains the OTT application and generates a registration request that requests provisioning of QoS through the network for the OTT application. A service delivery platform (SDP) configures an Application Programming Interface (API) to have dependent rules that provision a QoS level for the OTT application responsive to the registration request. A policy charging and rules function (PCRF) node controls QoS through the network provided for a communication session between the UE and the OTT application responsive to the QoS level provisioned for the OTT application.

Another related embodiment is directed to an OTT application server of a communications system. The OTT application server includes an OTT application that is configured to communicate a registration request to an Application Programming Interface (API) of a service delivery platform (SDP) requesting provisioning of a QoS level through a network of the communications system for the OTT application. The API is further configured to communicate a session services request message to the API of the SDP responsive to a communication session between a User Equipment node (UE) and the OTT application, and to provide communication services through the network for the communication session with the UE using the QoS level provisioned for the OTT application.

Another related embodiment is directed to a service delivery platform (SDP) of a communications system. The SDP includes circuitry that is configured to receive a registration request from an Over The Top (OTT) application on an OTT application server. The registration request requests provisioning of a QoS level for communications between the OTT application and a User Equipment node (UE) through a network of the communications system. The SDP circuitry configures an Application Programming Interface (API) of the SDP to have dependent rules that provision the QoS level for the OTT application responsive to the registration request.

### BRIEF DESCRIPTION OF THE DRAWINGS

The accompanying drawings, which are included to provide a further understanding of the disclosure and are incorporated in and constitute a part of this application, illustrate certain non-limiting embodiment(s) of the invention. In the drawings:

Figure 1 is a block diagram of a telecommunications system providing QoS enablement for OTT applications according to some embodiments;

Figure 2 illustrates a diagram of operations, methods and associated message flows by various nodes of the telecommunications system of Figure 1 for registering and provisioning QoS for an OTT application according to some embodiments;

Figure 3 illustrates a diagram of operations, methods and associated message flows by various nodes of the telecommunications system of Figure 1 for end users to register for use of a QoS level provisioned for an OTT application according to some embodiments;

Figure 4 illustrates a diagram of operations, methods and associated message flows by various nodes of the telecommunications system of Figure 1 for dynamic provisioning of QoS for a communication session responsive to a QoS level provisioned for an OTT application according to some embodiments;

Figure 5 illustrates a diagram of operations, methods and associated message flows by various nodes of the telecommunications system of Figure 1 for subscription based provisioning of QoS for OTT applications according to some embodiments;

Figure 6 illustrates a diagram of operations, methods and associated message flows by various nodes of the telecommunications system of Figure 1 for providing QoS treatment responsive to the subscription of Figure 5 according to some embodiments; and

Figure 7 is a block diagram of an example network node of the telecommunications system of Figure 1 that is configured according to some embodiments.

### DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, components and circuits have not been described in detail so as not to obscure the present invention.

Some embodiments are directed to a telecommunications system that enables a network operator to provision QoS for use by an OTT service provider, and to then control the QoS level provided through a network for communications from/to the OTT service provider.

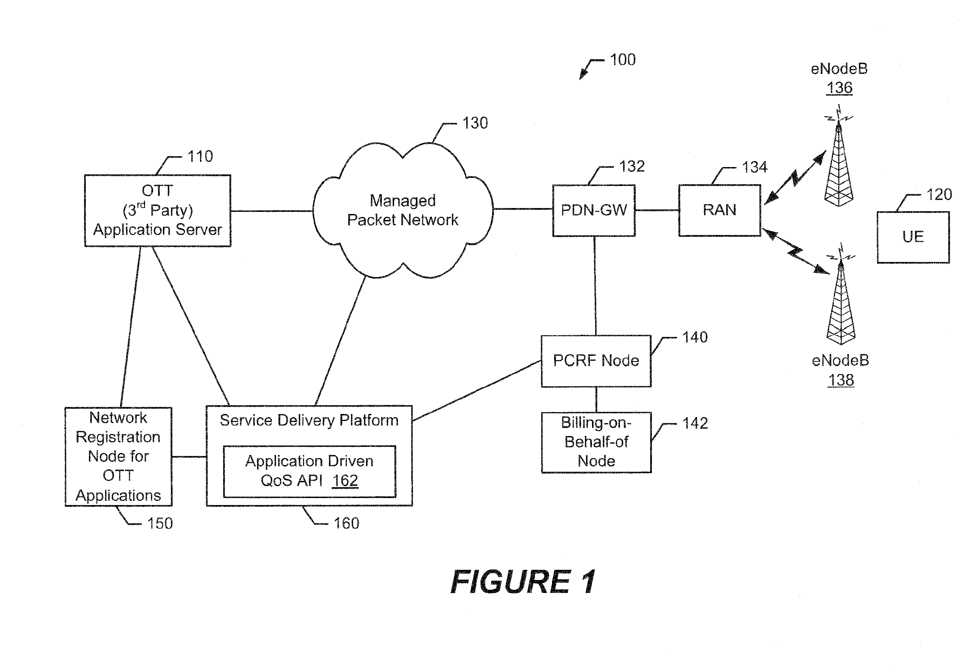

Figure 1 is a block diagram of a telecommunications system 100 that provides QoS enablement for OTT applications according to some embodiments. The system 100 includes an OTT application server 110 that communicates with a User Equipment node (UE) 120 through a managed packet network 130, a Packet Data Network (PDN) Gateway (PGW) 132, and a Radio Access Network (RAN) 134. The example system 100 further includes a network registration note 150, a service delivery platform 160, and a Policy and Charging Rules Function (PCRF) node 140.

The OTT application server 110 may be operated by an OTT service provider, such as Google®, Skype®, Vonage®, Facebook®, and can host one or more OTT applications that provide OTT services, such as voice-over-Internet-protocol (VOIP), video conferencing, messaging, electronic-mail, etc. to users of the UE 120. In the example system 100, the OTT service provider who operates the OTT application server 110 is different than the network operator who operates the packet network 130. The OTT application server 110 is therefore also referred to as a "3^{rd} Party" OTT application server.

The OTT service provider can establish a relationship with the network operator so that the OTT application server 130 can obtain an enhanced level of QoS for its communications to/from the UE 120 through the packet network 130. In some embodiments, the network operator configures the network registration node 150 and an application driven QoS Application Interface (API) 162 in the service delivery platform 160 for use in establishing a relationship between the OTT application server 110 and the network 130, and for then providing an enhanced level of QoS for communications between the OTT application and the UE 120.

The network registration node 150 functions to register an OTT application on the OTT application server 110 for access to enhanced QoS through the packet network 130. The service delivery platform 160 functions to provision a QoS level to the OTT application. The OTT application then communicates with the QoS API 162 of the service delivery platform 160 to request and obtain enhanced QoS for a communication session between the OTT application and the UE 120 pursuant to the provisioned QoS level.

The managed packet network 130 may include a private network and/or public network (e.g., Internet). The RAN 134 may contain one or more cellular radio access technology systems that may include, but are not limited to, Global Standard for Mobile (GSM) communication, General Packet Radio Service (GPRS), enhanced data rates for GSM evolution (EDGE), DCS, PDC, PCS, code division multiple access (CDMA), wideband-CDMA, CDMA2000, Universal Mobile Telecommunications System (UMTS), and/or 3GPP LTE (3rd Generation Partnership Project Long Term Evolution). The RAN 134 may alternatively or additionally communicate with the UE 120 through a Wireless Local Area Network (i.e., IEEE 802.11) interface, a Bluetooth interface, and/or other radio frequency (RF) interface. The example RAN 134 of Figure 1 communicates with the UE 120 through one or more enhanced Node B (eNodeB) radio transceiver base stations 136,138.

The UE 120 may correspond to a cellular phone, a desktop computer, a laptop computer, a tablet computer, a palmtop computer, a video gaming device or console, or another communication terminal. Although only one UE is shown in Figure 1 for ease of illustration, it is to be understood that the system 100 may control QoS provided through the packet network 130 between any number of UEs and any number of OTT application servers. Although various embodiments are described in the context of the UE 120 communicating wirelessly through a RAN 134, the system 100 is not limited thereto and may additionally or alternatively provide a wired connection between the managed network 130 and the UE 120 (e.g., via a cable modem, Digital Subscriber Line modem, and/or WiFi router).

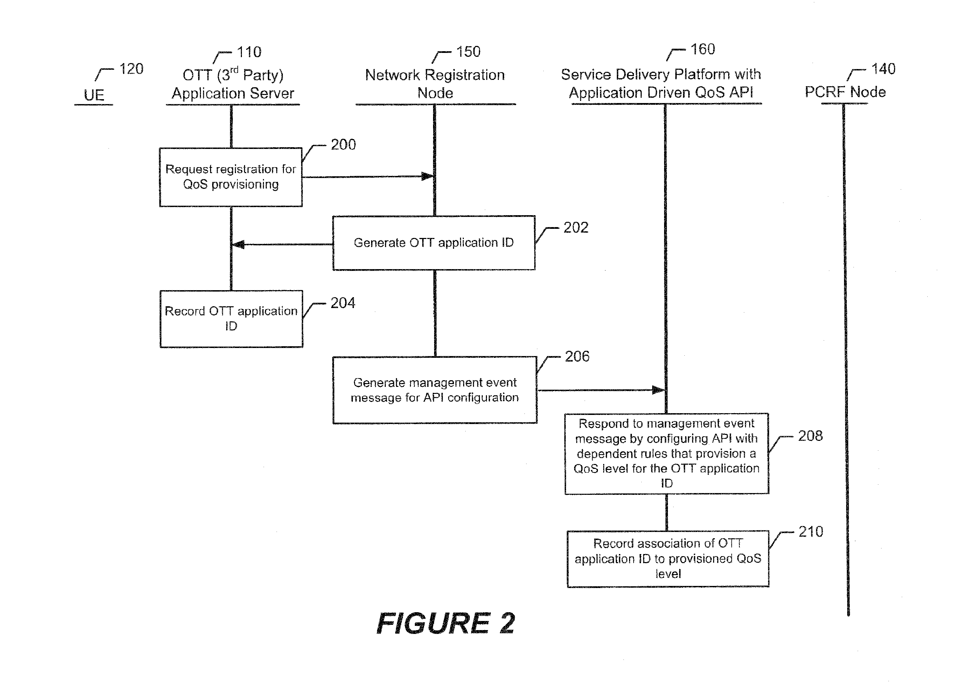

Figure 2 illustrates a diagram of operations, methods and associated message flows by various nodes of the telecommunications system 100 of Figure 1 for registering an OTT application and pre-provisioning QoS for the OTT application according to some embodiments. Referring to Figure 2, the OTT application server 110 containing the OTT application generates a registration request (block 200) that requests provisioning of QoS through the packet network 130 for the OTT application. The network registration node 150 responds to the registration request by generating an OTT application ID (block 202) that identifies the OTT application. The network registration node 150 generates a management event message (block 206), such as a Life Cycle Management event, that requests configuration of a QoS API at the service delivery platform 160 for use by the OTT application identified by the OTT application ID. The management event message may include the OTT application ID, an identifier for the OTT service provider, and/or information identifying requested QoS level.

The service delivery platform 160 configures the QoS API (block 208) to have dependent rules that provision a QoS level for use by the OTT application responsive to the management event message triggered by the registration request. The association between the OTT application ID and the provisioned QoS level is recorded. The association may be recorded within a local memory of the SDP 160, in the PCRF node 140, and/or in another network node that is network assessable to the PCRF node 140. The provisioned QoS level may define a minimum/maximum bit rate, packet delay, packet jitter, packet dropping probability, and/or bit error rate that shall be provided for communications through the packet network 130 from the UE 120 to the OTT application server 110 and/or from the OTT application server 110 to the UE 120.

As will be explained in further detail below, the SDP 160 in cooperation with the PCRF node 140 controls (210) QoS provided for a communication session through the packet network 130 between the UE 120 and the OTT application on the server 110 responsive to the QoS level provisioned for the OTT application. The PCRF node 140 may be preprovisioned with policy control rules for handling communication sessions between the UE 120 and the OTT application, or it may dynamically receive a request to change an active communication session to a defined QoS level (e.g., from best effort to an enhanced QoS level).

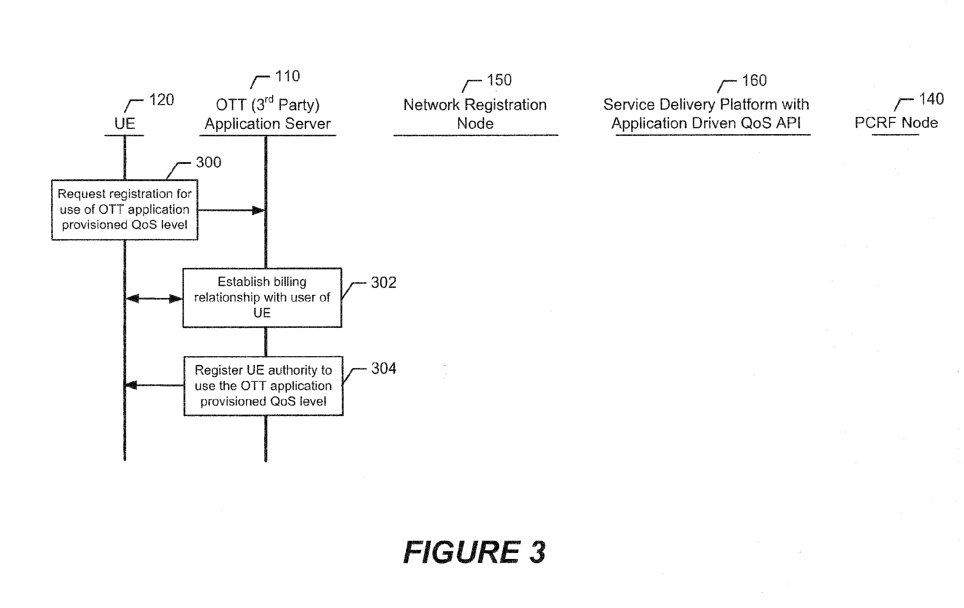

In some embodiments, the end-user (e.g., via the UE 120) establishes a billing relationship with the OTT application server 110, and the network operator charges the OTT application server 110 for costs associated with the end-user's use of the QoS provisioned to the OTT application. The OTT application server 110 can then pass along these charges to the end-user using the billing relationship. Figure 3 illustrates a diagram of operations, methods and associated message flows by various nodes of the telecommunications system of Figure 1 for an end-user of the UE 120 to register for use of the QoS level that has been provisioned for the OTT application.

Referring to Figure 3, the UE 120 requests (block 300) registration for its use of the OTT application provisioned QoS level. The OTT application server 110 establishes (block 302) a billing relationship with the user of the UE 120. The OTT application server 110 registers (block 304) the UE 120 to have authority to use the OTT application provisioned QoS level for communications between the UE 120 and the OTT application through the packet network 130.

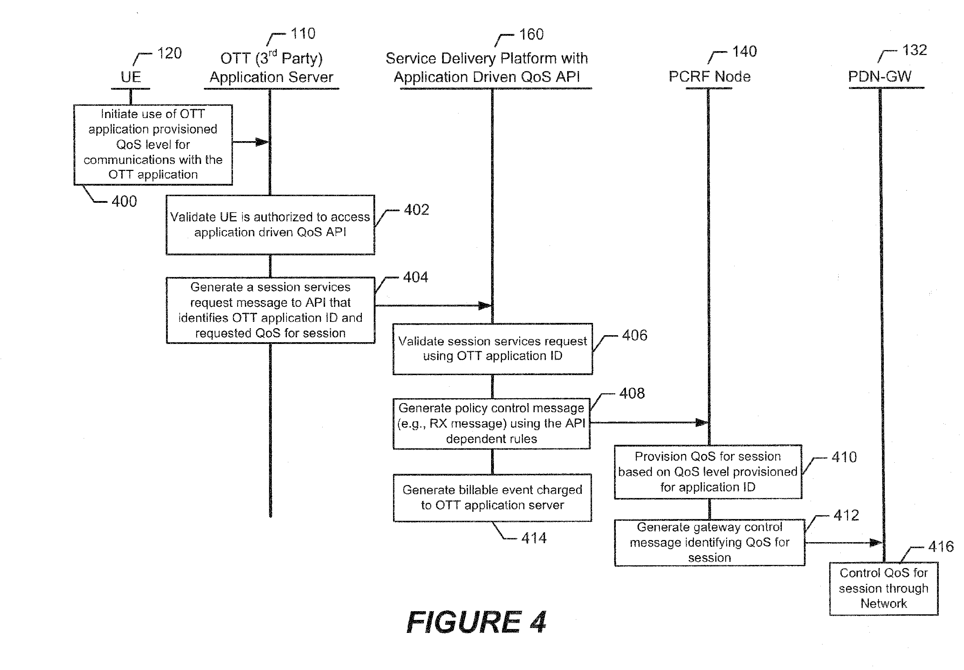

Figure 4 illustrates a diagram of operations, methods and associated message flows by various nodes of the telecommunications system 100 of Figure 1 for dynamic provisioning of QoS for a communication session responsive to a QoS level that has been provisioned for an OTT application according to some embodiments. Referring to Figure 4, the UE 120 communicates a message, which can contain the OTT application ID, to the OTT application server 110 to initiate (block 400) use of the OTT application provisioned QoS level for communications with the OTT application. The message communicated from the UE 120 to the OTT application server 110 may be handled by nodes of the packet network 130 according to a best effort QoS. The OTT application server 110 validates (block 402) that the UE 120 is authorized to use the provisioned QoS level (which can be an enhanced level of QoS above the best effort QoS level) and, responsive thereto, generates (block 404) to the QoS API 162 of the service delivery platform 160 a session services request message that identifies an OTT application ID on the OTT application server 110 and a requested QoS for the communication session between the UE 120 and the OTT application ID.

The QoS API 162 of the service delivery platform 160 validates (block 406) the session services request using the OTT application ID to determine the authorization for the UE 120 to access the QoS API 162 to use the QoS level provisioned for the OTT application for a communication session between the UE 120 and the OTT application on the OTT server 110. Response to the validation, the QoS API 162 generates (block 408) a policy control message to the PCRF node 140 using the QoS API dependent rules, where the policy control message may identify the QoS level that has been provisioned for the OTT application and/or the QoS requested by the session services request.

The PCRF node 140 provisions (block 410) QoS for the communication session responsive to the QoS level that has been provisioned for the OTT application, and the provisioning may be further responsive to the QoS requested by the session services request. The PCRF node 140 generates (block 412) a gateway control message that identifies the QoS provision for the communication session. The PDN-GW 132 uses the gateway control message to control (block 416) the QoS that is provided through the packet network 130 for a communication session between the UE 120 and the OTT application on the OTT application server 110.

The service delivery platform 160 may generate (block 414) a billable event that is charged to the OTT application server 110 for the QoS that is provisioned to the communication session. The OTT application server 110 may then bill the user of the UE 120 using the established billing relationship (e.g., operations of Figure 3) to pass-along the charges.

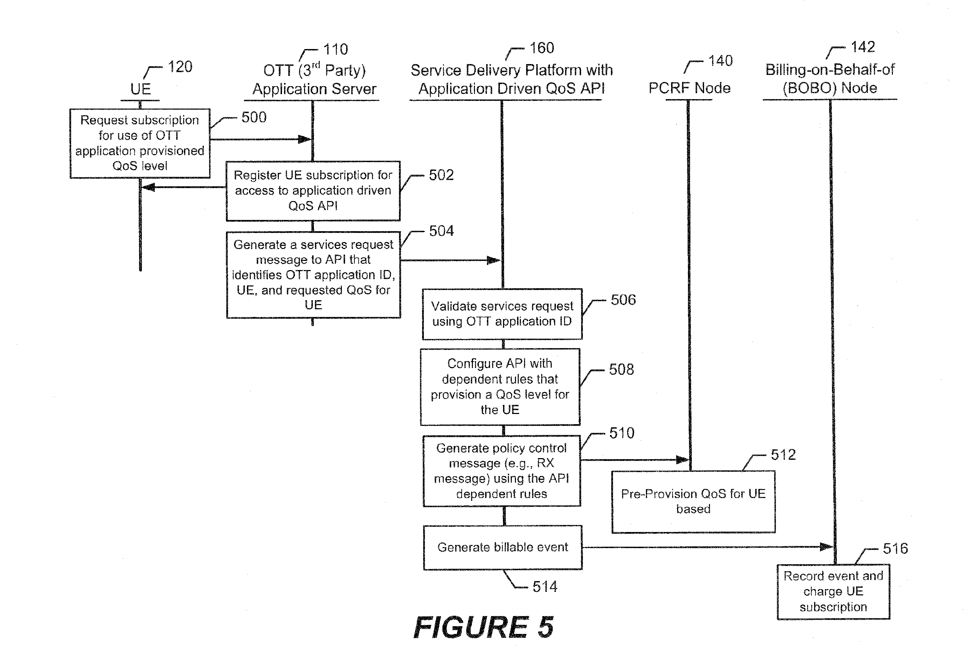

In some other embodiments, the end-user establishes a subscription that allows the user to use the QoS that has been provisioned to the OTT application for communication sessions between the UE 120 and an OTT application on the OTT application server 110. Figure 5 illustrates a diagram of operations, methods and associated message flows by various nodes of the telecommunications system 100 of Figure 1 for subscription based provisioning of QoS for OTT applications according to some embodiments.

Referring to Figure 5, the UE 120 generates a request (block 500) for a subscription for use of the QoS level that has been provisioned for the OTT application on the OTT application server 110. In response to the subscription request, the OTT application server 110 registers (block 502) the UE 120 for authorized access to the QoS API 162 of the service delivery platform 160 to use the QoS level that has been provisioned for the OTT application. The OTT application server 110 generates and communicates (block 504) a services request message that identifies the OTT application, the UE 120, and a QoS level requested for the UE 120 to the QoS API 162 of the service delivery platform 160.

The service delivery platform 160 validates (block 506) the services request message from the OTT application server using the identified OTT application and the dependent rules of the QoS API 162. Responsive to the validation, the service delivery platform 160 configures (block 508) the QoS API 162 to have dependent rules that provision a QoS level for the UE 120. Also responsive to the validation, the service delivery platform 160 generates and communicates (block 510) a policy control message from the SDP to the PCRF node using the dependent rules of the QoS API 162. The PCRF node 140 responds to the policy control message by pre-provisioning (block 512) a QoS level for use by the UE 120.

The QoS API 162 of the service delivery platform 160 may communicate a billable event message to the billing-on-behalf-of (BOBO) node 142 responsive to the services request message. The billing-on-behalf-of node 142 can have a billing relationship with the user of the UE 120 that enables the charges for the subscription for access to the provisioned QoS level to be billed to the user.

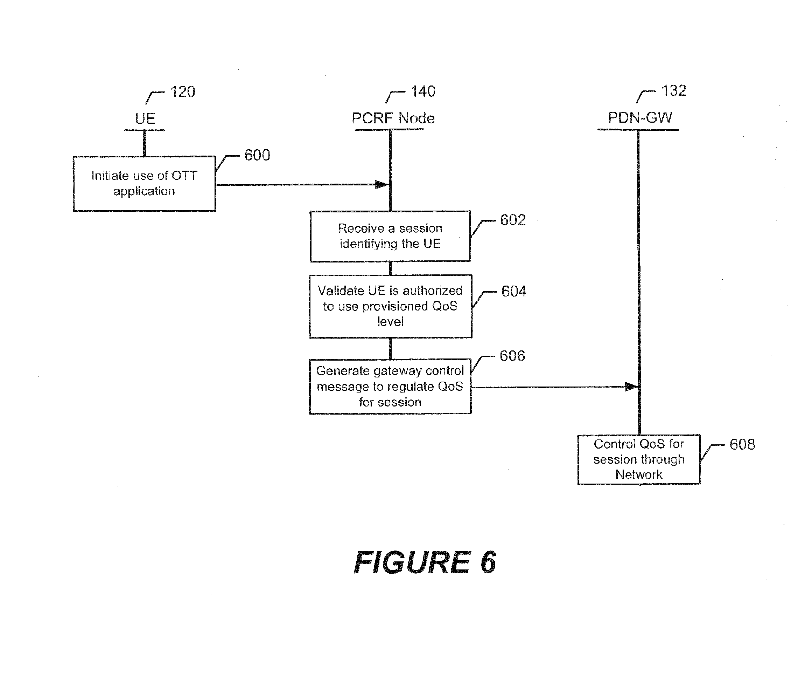

Figure 6 illustrates a diagram of operations, methods and associated message flows by various nodes of the telecommunications system 100 of Figure 1 for providing QoS treatment responsive to the subscription of Figure 5 according to some embodiments. Referring to Figure 6, the UE 120 initiates (block 600) use of the OTT application on the OTT application server 110, and which causes the PCRF node 140 to receive (block 602) an application session that identifies the UE 120.

The PCRF node 140 may validate (block 604) that the UE 120 is authorized to use the QoS level that has been provisioned to the UE 120. Responsive to validation of the UE 120, the PCRF node 140 generates and communicates (block 606) a gateway control message to the PDN-GW 132. The PDN-GW 132 responds to the gateway control message by controlling QoS (block 608) provided for the communication session through the packet network 130 between the UE 120 and the OTT application on the OTT application server 110 responsive to the QoS level provisioned to the UE 120.

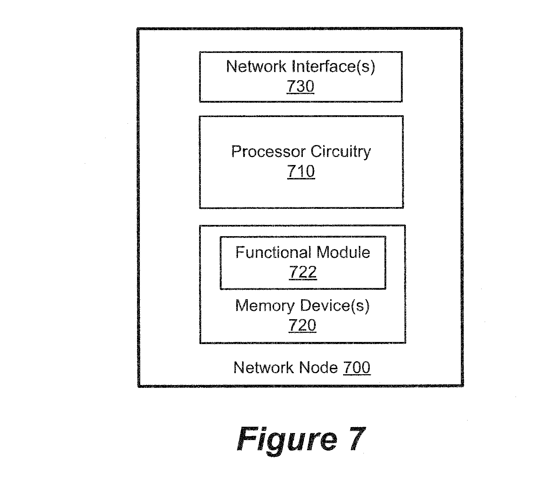

Figure 7 is a block diagram of a network node 700 that is configured according to some embodiments. The network node 700 may be used in one or more of the nodes of the telecommunications system 100 of Figure 1, including, but not limited to, the OTT application server 110, the UE 120, the packet network 130, the PDN-GW 132, the RAN 134, the PCRF 140, the billing-on-behalf-of node 142, the network registration node 150, and/or the service delivery platform 160. The network node 700 can include one or more network interfaces 730, processor circuitry 710, and memory circuitry/devices 720 that contain functional modules 722.

The processor circuitry 710 may include one or more data processing circuits, such as a general purpose and/or special purpose processor (e.g., microprocessor and/or digital signal processor). The processor circuitry 710 is configured to execute computer program instructions from the functional modules 722 in the memory circuitry/devices 720, described below as a computer readable medium, to perform some or all of the operations and methods that are described above for one or more of the embodiments, such as one or more of the embodiments of Figures 1-6. Accordingly, the processor circuitry 710 can be configured by execution of the computer program instructions in the functional modules 722 to carry out at least some of the functionality described herein to provide methods and apparatus for controlling QoS provided through a packet network for communications between an OTT application on an OTT application server and one or more UEs.

In the above-description of various embodiments of the present invention, it is to be understood that the terminology used herein is for the purpose of describing particular embodiments only and is not intended to be limiting of the invention. Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of this specification and the relevant art and will not be interpreted in an idealized or overly formal sense expressly so defined herein.

When a node is referred to as being "'connected", "coupled", "responsive", or variants thereof to another node, it can be directly connected, coupled, or responsive to the other node or intervening nodes may be present. In contrast, when a node is referred to as being "directly connected", "directly coupled", "directly responsive", or variants thereof to another node, there are no intervening nodes present. Like numbers refer to like nodes throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

As used herein, the terms "comprise", "comprising", "comprises", "include", "including", "includes", "have", "has", "having", or variants thereof are open-ended, and include one or more stated features, integers, nodes, steps, components or functions but does not preclude the presence or addition of one or more other features, integers, nodes, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

A tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/BlueRay).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks. Accordingly, embodiments of the present invention may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated. Moreover, although some of the diagrams include arrows on communication paths to show a primary direction of communication, it is to be understood that communication may occur in the opposite direction to the depicted arrows.

Many different embodiments have been disclosed herein, in connection with the above description and the drawings. It will be understood that it would be unduly repetitious and obfuscating to literally describe and illustrate every combination and subcombination of these embodiments. Accordingly, the present specification, including the drawings, shall be construed to constitute a complete written description of various example combinations and subcombinations of embodiments and of the manner and process of making and using them, and shall support claims to any such combination or subcombination.

Many variations and modifications can be made to the embodiments without substantially departing from the principles of the present invention. All such variations and modifications are intended to be included herein within the scope of the present invention.

## Claims

1. A method of controlling Quality of Service, QoS, provided through a network for communications between an Over The Top, OTT, application on an OTT application server and a User Equipment node, UE, the method comprising the steps of:
receiving a registration request from the OTT application requesting provisioning of
QoS through the network for the OTT application;
configuring at a service delivery platform, SDP, an Application Programming
Interface, API, to have dependent rules that provision a QoS level for the OTT application responsive to the registration request; and
controlling QoS through the network provided for a communication session between
the UE and the OTT application responsive to the QoS level provisioned for the OTT application.

2. The method of Claim 1, wherein controlling QoS through the network provided for a communication session between the UE and the OTT application comprises the steps of:
generating a session services request message from the OTT application server to the
API of the SDP responsive to the communication session between the UE and the OTT application;
generating at the SDP a policy control message using the API dependent rules,
wherein the policy control message identifies the QoS level provisioned for the OTT application;
provisioning at the PCRF node a QoS level to the communication session responsive
to the policy control message; and
controlling QoS provided for the communication session through the network
responsive to the QoS level provisioned to the communication session.

3. The method of Claim 2, further comprising the step of:
generating by the API of the SDP a billable event that is charged to the OTT
application server responsive to provisioning of the QoS level to the communication session.

4. The method of Claim 3, further comprising the steps of:
receiving at the OTT application server a registration request for use of the QoS level
provisioned for the OTT application;
establishing a billing relationship between the OTT application server and a user of
the UE responsive to the registration request; and
registering UE authority to use the QoS level provisioned for the OTT application at
the OTT application server.

5. The method of Claim 4, further comprising the step of:
billing the user of the UE using the billing relationship responsive to the billable event
that charges the OTT application server for the QoS level provisioned to the communication session.

6. The method of Claim 2 or a Claim dependent on claim 2, further comprising the
steps of:
validating at the OTT application server the UE authority to access the API responsive to the communication session between the UE and the OTT application; and
generating the session services request message responsive to validation of the UE
authority to access the API of the SDP.

7. The method of one of Claims 1 to 6, wherein controlling QoS through the network provided for a communication session between the UE and the OTT application comprises the steps of:
receiving a subscription request for the UE; and
registering the UE for authorized access to the API of the SDP to use the QoS level
provisioned for the OTT application.

8. The method of Claim 7, further comprising the steps of:
communicating a services request message that identifies the OTT application, the
UE, and a QoS level requested for the UE from the OTT application server to the API of the SDP;
communicating a policy control message from the SDP to the PCRF node responsive
to the API dependent rules and the services request message;
provisioning at the PCRF node a QoS level to the UE responsive to the policy control
message; and
controlling QoS through the network provided for a communication session between
the UE and the OTT application responsive to the QoS level provisioned to the UE.

9. The method of Claim 8, further comprising the steps of:
communicating a billable event message from the API of the SDP to a billing-on-behalf-of, BOBO, node responsive to the services request message; and
billing at the BOBO node a user of the UE for the QoS level provisioned to the UE.

10. The method of Claim 8 or 9, further comprising the steps of:
validating at the SDP the services request message from the OTT application server
using the OTT application identified by the services request message and the dependent rules of the API; and
communicating the policy control message from the SDP to the PCRF node
responsive to validation of the services request message.

11. The method of one of Claims 8 to 10, further comprising the steps of:
receiving at the PCRF node the communication session between the UE and the OTT
application; and
controlling at the PCRF node the QoS provided for the communication session
through the network responsive to the QoS level provisioned to the UE.

12. The method of one of Claims 8 to 11, wherein controlling QoS through the network provided for a communication session between the UE and the OTT application responsive to the QoS level provisioned to the UE comprises the step of:
communicating a gateway control message to a network gateway that controls QoS
through the network for the communication session responsive to the QoS level provisioned to the UE.

13. A communications system that controls Quality of Service, QoS, provided for communications through a network between an Over The Top, OTT, application and a User Equipment node, UE, the communications system comprising:
an OTT application server containing the OTT application that generates a
registration request that requests provisioning of QoS through the network for the OTT application;
a service delivery platform, SDP, that configures an Application Programming
Interface, API, of the SDP to have dependent rules that provision a QoS level for the OTT application responsive to the registration request; and
a policy charging and rules function, PCRF, node that controls QoS through the
network provided for a communication session between the UE and the OTT application responsive to the QoS level provisioned for the OTT application.

14. The communications system of Claim 13, wherein:
the OTT application server communicates a session services request message to the
API of the SDP responsive to the communication session between the UE and the OTT application;
the SDP communicates a policy control message to the PCRF node using the API
dependent rules; and
the PCRF node provisions a QoS level to the communication session based on the
QoS level provisioned for the OTT application and responsive to the policy control message, and controls QoS through the network provided for the communication session responsive to the QoS level provisioned to the communication session.

15. The communications system of Claim 13 or 14, wherein:
the OTT application server is configured to:
receive a subscription request for the UE;
register the UE for authorized access to the API of the SDP to use the QoS level
provisioned for the OTT application; and
communicate a services request message to the API of the SDP that identifies the
OTT application, the UE, and a QoS level requested for the UE;
the SDP communicates a policy control message to the PCRF node using the API
dependent rules and responsive to the services request message;
the PCRF node provisions a QoS level to the UE responsive to the policy control
message, and controls QoS through the network provided for the communication session between the UE and the OTT application responsive to the QoS level provisioned to the UE.

16. An Over The Top, OTT, application server of a communications system, the OTT application server comprising an OTT application that is configured to:
communicate a registration request to an Application Programming Interface, API, of
a service delivery platform, SDP, requesting provisioning of a QoS level through a network of the communications system for the OTT application;
communicate a session services request message to the API of the SDP responsive to
a communication session between a User Equipment node, UE, and the OTT application; and
provide communication services through the network for the communication session
with the UE using the QoS level provisioned for the OTT application.

17. The OTT application server of Claim 16, further configured to:
receive a subscription request for the UE;
register the UE for authorized access to the API of the SDP to use the QoS level
provisioned for the OTT application; and
communicate a services request message to the API of the SDP that identifies the
OTT application, the UE, and a QoS level requested for the UE.

18. A service delivery platform, SDP, of a communications system, the SDP
comprising circuitry configured to:
receive a registration request from an Over The Top, OTT, application on an OTT application server, the registration request requesting provisioning of a QoS level for communications between the OTT application and a User Equipment node, UE, through a network of the communications system; and
configure an Application Programming Interface, API, of the SDP to have dependent
rules that provision the QoS level for the OTT application responsive to the registration request.

19. The SDP of Claim 18, further configured to:
communicate a policy control message to a policy charging and rules function, PCRF,
node using the API dependent rules to control QoS through the network provided for a communication session between the UE and the OTT application responsive to the QoS level provisioned for the OTT application.

20. The SDP of Claim 18 or 19, further configured to:
communicate a billable event message to the OTT application server that charges the
OTT application server for the QoS level provisioned for the OTT application.

21. The SDP of one of Claims 18 to 20, further configured to:
receive a services request message from the OTT application server that identifies the
OTT application, the UE, and a QoS level requested for the UE;
configure the API dependent rules to provision the QoS level for the UE; and
communicate a policy control message to a policy charging and rules function, PCRF,
node using the API dependent rules to control QoS through the network provided for communication sessions between the UE and the OTT application responsive to the QoS level provisioned for the UE.

22. The SDP of Claims 21, further configured to:
communicate a billable event message to a billing-on-behalf-of, BOBO, node
responsive the services request message to bill a user of the UE for the QoS level provisioned to the UE.
